# FASCICULE DE BREVET EUROPEEN

(11) **EP 3 691 858 B1**
(45) Date de publication et mention de la délivrance du brevet: **08.03.2023**
(21) Numéro de dépôt: 18792433.7
(22) Date de dépôt: 01.10.2018
(51) Int. Cl.: B29C 53/56, B29D 30/58

(54) **PROCÉDÉ DE FABRICATION D'UN PROFIL PAR ENROULEMENT D'UNE BANDELETTE À SECTION VARIABLE**
VERFAHREN ZUR HERSTELLUNG EINES PROFILS DURCH AUFWICKELN EINES BANDES MIT VARIABLEM QUERSCHNITT
METHOD FOR MANUFACTURING A PROFILE BY WINDING A VARIABLE-SECTION STRIP

(30) Priorité: 04.10.2017 FR 1759256
(43) Date de publication de la demande: 12.08.2020
(73) Titulaire: Compagnie Générale des Etablissements Michelin, 63000 Clermont-Ferrand (FR)
(72) Inventeur: BESSAC, Christophe, 63040 Clermont-Ferrand Cedex 9 (FR); ROUBY, Mickael, 63040 Clermont-Ferrand Cedex 9 (FR); FILIOL, Antoine, 63040 Clermont-Ferrand Cedex 9 (FR)
(74) Mandataire: Redouté, Gilles Pierre
(86) Numéro de dépôt international: PCT/FR2018/052409
(87) Numéro de publication internationale: WO 2019/069003

(56) Documents cités:
- WO-A1-2006/046354
- US-A1- 2015 068 667

## Description

L'invention concerne un procédé de réalisation d'un profilé par enroulement.

Ce procédé, largement utilisé dans l'industrie du pneumatique et connu en soi, consiste à réaliser une ébauche de pneumatique en formant des éléments de profilé par enroulement de plusieurs spires d'une bandelette de caoutchouc non vulcanisé sur un tambour d'assemblage en rotation.

Le profil final de l'élément de profilé est obtenu en déplaçant transversalement, à l'aide d'un dispositif de trancanage, selon un pas prédéterminé et variable, le point d'application de la bandelette sur la surface du tambour d'assemblage.

La bandelette, dont le profil de la section transversale est adapté, peut provenir d'un moyen de déroulage ou, préférentiellement, d'un moyen d'extrusion disposé en amont du dispositif de trancanage.

Ce procédé autorise la réalisation d'ébauches de pneumatiques de plus en plus complexes, en ce qu'il permet de déposer des éléments de profilés formés de mélanges de caoutchouc différents à des emplacements radiaux et transversaux choisis en fonction de leur adaptation au fonctionnement local du pneumatique.

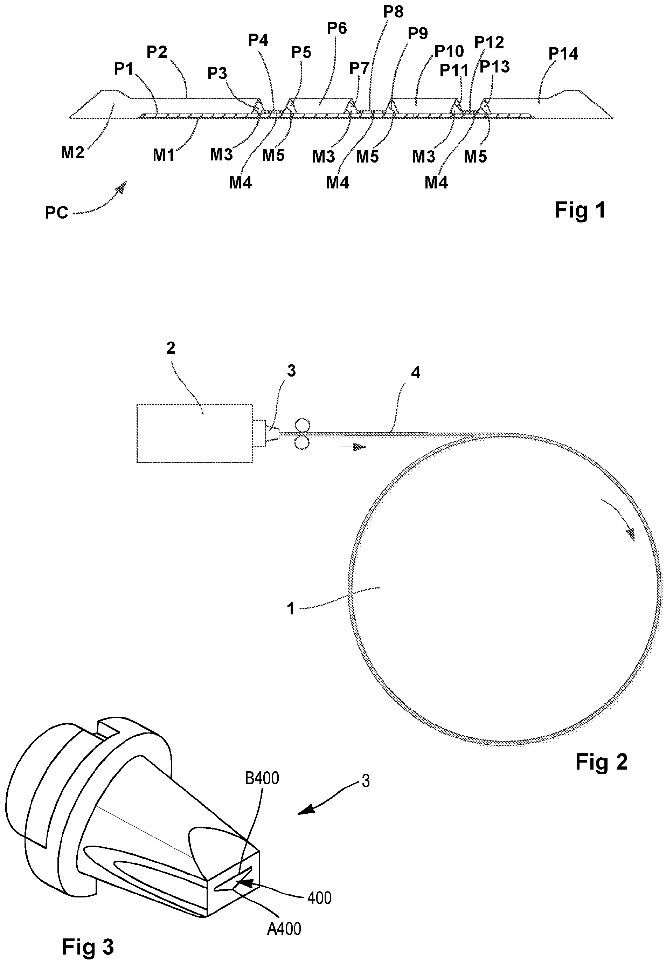

La figure 1 illustre une section transversale d'une bande de roulement complexe destinée à former un pneumatique de type directionnel équipant un véhicule sportif de haut de gamme. La bande de roulement comprend une sous couche P1 formée d'un premier mélange M1, une bande de roulement proprement dite P2, formée de l'assemblage d'éléments de profil, P2, P6, P10, P16, répartis transversalement et formés à partir d'un même mélange M2. Les sillons longitudinaux sont bordés par des éléments de renforcement P3, P5, P7, P9, P11, P13 de section sensiblement triangulaire, et formés de mélanges de caoutchouc différents, alternativement M3 ou M5 selon que l'élément de renfort est disposé côté intérieur ou côté extérieur au véhicule. Le fond des sillons est garni d'éléments de profilé, P4, P8, P12, formés à partir d'un mélange M4.

De nombreux documents de l'art antérieur décrivent les techniques de réalisation de pneumatiques par enroulement de bandelettes.

Ainsi, le document JP2015229438 décrit un procédé d'enroulement pour former la bande de roulement d'un pneumatique dans lequel les bandelettes sont enroulées selon deux spirales inversées selon le côté du pneumatique dans le but d'améliorer l'uniformité du pneumatique.

Le document EP2805838, propose une méthode d'enroulement d'une bandelette constituée d'un mélange de caoutchouc fortement conducteur de l'électricité à base de noir de carbone, pour former un élément de profilé conducteur de l'électricité inséré dans une bande de roulement formée d'un matériau faiblement conducteur de l'électricité à base de silice.

Un autre état de la technique est connu par le document WO2006/046354.

Toutefois, les procédés décrits dans les documents JP2015229438 et EP2805838 s'avèrent inadaptés pour réaliser des éléments de profil de section triangulaire dont la base est relativement étroite, tels que les éléments de profilés P3, P5, P7, P9, P11, P13 de section sensiblement triangulaire, illustrés à la figure 1 et formant les éléments de renfort.

Le procédé selon l'invention a pour objet d'apporter une solution au problème posé ci-dessus.

Ce procédé prévoit de mettre en oeuvre les étapes suivantes au cours desquelles :
- Etape A: on délivre une bandelette de caoutchouc non vulcanisé de section constante donnée, de préférence sensiblement triangulaire,
- Etape B : on étire la bandelette d'un pourcentage d'élongation variable selon une loi prédéterminée, pour amener la bandelette à une section réduite,
- Etape C : on réalise ledit élément de profilé en enroulant sur un tambour d'assemblage en rotation la bandelette de section réduite sur elle-même sans modifier la position transversale de l'axe longitudinal de la bandelette.

De la sorte, en choisissant judicieusement le profil de la section transversale de la bandelette, et le pourcentage d'étirement ayant pour finalité de réduire la section de la bandelette en modifiant sa largeur et sa hauteur, on peut construire, par empilement sur elles-mêmes de spires de bandelette de section variable, des éléments de profilés dont la section finale est adaptée à la réalisation des éléments de renfort décrits ci-dessus.

L'utilisation d'une bandelette qui possède une section sensiblement triangulaire présente plusieurs avantages.

Un premier avantage tient à la superficie couverte par une telle section triangulaire. En effet, même éventuellement réduite par étirement, une telle section sensiblement - voire exactement - triangulaire conserve une superficie relativement importante, et donc une bonne capacité de "remplissage" de l'élément de profilé en construction.

On peut par conséquent réaliser l'élément de profilé au moyen d'un nombre relativement restreint de sections de bandelette empilées, et ainsi fabriquer ledit élément de profilé rapidement, en faisant effectuer à la bandelette un nombre relativement restreint de tours d'enroulement sur le tambour, où chaque tour ajoute à l'élément de profilé en construction une surface, et plus particulièrement une épaisseur radiale, qui correspond à la section réduite de la bandelette. Le temps de cycle de fabrication et la consommation d'énergie peuvent ainsi être minimisés.

En outre, en limitant le nombre de sections de bandelette nécessaires à la constitution d'un même élément de profilé, on évite de fractionner ledit élément de profilé en un trop grand nombre de sections élémentaires, ce qui permet de limiter la sensibilité dudit élément de profilé à la déformation ou à la décohésion.

Un autre avantage de la section triangulaire tient à la grande stabilité de l'empilement qui est obtenu en enroulant la bandelette sur elle-même, à la position transversale considérée le long de l'axe du tambour.

En effet, la forme triangulaire, par nature non plate, favorise l'accroche l'une à l'autre, et le cas échéant le centrage l'une par rapport à l'autre à la position transversale choisie, des couches successives qui correspondent aux spires formées par la bandelette et qui constituent ledit empilement. En particulier, un tel agencement empêche notamment les couches successives de bandelette de glisser axialement les unes par rapport aux autres, le long de l'axe du tambour.

L'élément de profilé ainsi obtenu présente donc une géométrie précise, particulièrement robuste et stable, et résiste très bien à l'affaissement et aux efforts transverses, et ce y compris lorsque ledit élément de profilé présente axialement une base étroite et/ou lorsque la dimension axiale dudit profilé, considérée parallèlement à l'axe du tambour, va en rétrécissant au fur et à mesure que l'on s'éloigne radialement de l'axe dudit tambour, comme cela est par exemple le cas lorsque ledit élément de profilé présente une section triangulaire.

Avantageusement, le choix d'une bandelette de section triangulaire facilite ainsi l'emboîtement des couches successives qui constituent l'élément de profilé, et rend possible la réalisation d'un élément de profilé qui présente des pentes de toute inclinaison souhaitée par rapport à l'axe de tambour, et/ou qui possède un sommet particulièrement fin.

Bien évidemment, le procédé n'est pas, dans l'absolu, limité à la réalisation d'éléments de profilé de section triangulaire, bien que cette forme soit privilégiée, et comme on le verra par la suite il est possible d'obtenir des éléments de profilé de sections transversales différentes.

Le procédé selon l'invention peut aussi comprendre isolément, ou en combinaison, l'exécution des actions suivantes :
- On réalise la bandelette par extrusion d'une bande de section constante.
- On utilise une extrudeuse comprenant un piston se déplaçant à vitesse contrôlée dans un cylindre
- A l'étape B, on étire la bandelette en ajustant le rapport entre la vitesse à laquelle on délivre la bandelette de profil constant et la vitesse circonférentielle du tambour d'assemblage.
- La vitesse circonférentielle du tambour d'assemblage est constante, et dans lequel on délivre la bandelette à une vitesse variable.
- On ajuste le débit de l'outil d'extrusion.
- On délivre la bandelette à une vitesse constante, et on fait varier la vitesse circonférentielle du tambour d'assemblage.
- La bandelette de section constante a un profil triangulaire isocèle.
- L'élément de profilé a une section sensiblement triangulaire.
- La température de la bandelette de section constante au cours de l'étape B est comprise entre 60°C et 100°C
- Le pourcentage d'élongation de la bandelette varie de 0% à 300%.

L'invention sera mieux comprise à la lecture de la description qui suit et des figures annexées, qui sont fournies à titre d'exemples et ne présentent aucun caractère limitatif, dans lesquelles :
- La figure 1 est une vue en coupe transversale d'un profilé complexe destiné à former la bande de roulement d'un pneumatique.
- La figure 2 est une vue schématique d'une installation de pose par enroulement.
- La figure 3 illustre une vue en perspective d'une buse d'extrusion.
- La figure 4 est une vue en coupe transversale d'un élément de profilé selon l'invention.
- La figure 5 est une vue en coupe de la section transversale d'une bandelette pour la réalisation d'élément d'un premier type d'élément de profil.
- La figure 6 est une vue en coupe de la section transversale d'une bandelette pour la réalisation d'élément d'un deuxième type d'élément de profil.
- La figure 7 est une vue en coupe de la section transversale d'une bandelette pour la réalisation d'élément d'un troisième type d'élément de profil.
- La figure 8 est une vue en coupe de la section transversale d'une bandelette pour la réalisation d'élément d'un quatrième type d'élément de profil.

Le dispositif de pose permettant l'exécution du procédé selon l'invention comprend, à titre d'exemple, un tambour d'assemblage rotatif à l'aide d'un ensemble motorisé (non représenté), une extrudeuse 2 débouchant dans une buse 3 également illustrée à la figure 3.

Cet ensemble permet de délivrer une bandelette 4 et d'enrouler cette dernière sur le tambour d'assemblage 1.

A **l'étape A** on délivre la bandelette 4. Le profil de la section transversale 400, 410, 420, 430 de la bandelette est constant et connu. De façon particulièrement préférentielle, cette section de bandelette est sensiblement triangulaire, voire exactement triangulaire, et de préférence de forme triangulaire isocèle.

Comme indiqué plus haut, la forme triangulaire de la section facilite la réalisation rapide d'éléments de profilés P3, P5, P7, P9, P11, P13, et notamment d'éléments de profilés sensiblement triangulaires, particulièrement stables.

Le choix plus spécifique d'une section de bandelette de forme triangulaire isocèle confère avantageusement à ladite bandelette une certaine symétrie et donc un comportement relativement homogène, et permet de ce fait une bonne maîtrise dimensionnelle de la section de la bandelette lors de l'étirement ainsi qu'une bonne maîtrise de la pose sur le tambour, ce qui simplifie la fabrication de l'élément de profilé P3, P5, P7, P9, P11, P13 considéré.

Bien entendu, la forme de la section de la bandelette délivrée n'aura pas nécessairement besoin d'être strictement triangulaire, et pourra faire l'objet de certaines variantes sans sortir du cadre de l'invention.

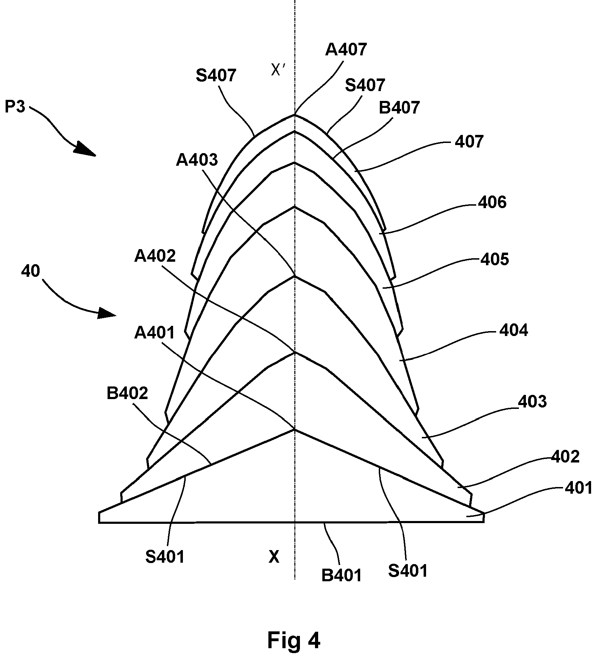

En particulier, il n'est pas exclu que l'on puisse, notamment par commodité de fabrication de la bandelette 4, tronquer légèrement les coins de la base B400 de la section triangulaire, et ainsi obtenir non pas des coins pointus, mais plutôt des chanfreins ou des arrondis, pour relier la base B400, radialement interne, de la section triangulaire aux côtés S400 de la section triangulaire qui sont adjacents au sommet A400, radialement externe, de ladite section triangulaire, tel que cela est notamment visible sur la figure 4.

De même, on pourrait envisager, selon une possible variante, de conférer un léger bombé, de préférence convexe, aux côtés S400 de la section triangulaire qui sont adjacents au sommet A400 radialement externe de ladite section triangulaire. Ceci étant, on pourra préférer des côtés S400 rectilignes.

La base B400 de la section triangulaire de la bandelette telle que délivrée sera quant à elle de préférence rectiligne. De la sorte, la bandelette de section constante 4 aura de préférence un profil triangulaire à base B400 plate.

Une base B400, B401 initialement plate assurera notamment une bonne assise de la première spire 401 sur le tambour.

Le moyen permettant de délivrer la bandelette 4 n'est pas limité au moyen, tel qu'une extrudeuse, indiqué ci-dessus. On peut également utiliser un moyen de déroulage d'une bandelette délivrée à température ambiante, une calandre comprenant un rouleau de profilage, ou encore, préférentiellement, une extrudeuse à piston circulant à vitesse contrôlée dans un cylindre et permettant de délivrer le mélange de caoutchouc à un débit constant et calibré.

La bandelette fournie par l'ensemble d'extrusion 2 sort de la buse 3 selon le profil 400, 410, 420, 430 choisi, de préférence triangulaire, et plus préférentiellement triangulaire isocèle. On considère ici que ce profil est constant quel que soit le débit de sortie du mélange fourni par l'extrudeuse 2.

La vitesse linéaire de sortie de la bandelette 4 dépend alors directement du débit de fourniture du moyen d'extrusion 2.

A **l'étape B,** pour étirer la bandelette, on modifie alors le rapport entre la vitesse linaire du profilé en sortie de la buse 3 et la vitesse circonférentielle du tambour d'assemblage 1.

Le rapport entre ces deux vitesses détermine alors le pourcentage d'étirement de la bandelette 4.

Pour modifier ce rapport de vitesse on peut, au choix, agir sur le débit d'extrusion en modifiant par exemple la vitesse de déplacement du piston ou la vitesse de rotation de la vis d'extrusion, ou alternativement sur la vitesse de rotation du tambour d'assemblage 1.

De préférence, pour faciliter l'étirement plastique de la bandelette, on choisira de procéder à cette opération lorsque la bandelette est encore chaude, préférentiellement à une température comprise entre 60°C et 100°C.

Le pourcentage d'étirement peut alors atteindre 300%, sans risque de rompre la bandelette 4.

A **l'étape C,** on dépose la bandelette 4 dont le profil de la section transversale a été réduit sur le tambour d'assemblage 1, en disposant les spires les unes sur les autres, sans modifier la position transversale de l'axe longitudinal de la bandelette. En d'autres termes, l'angle de trancanage est égal à zéro.

La figure 4 illustre la section transversale 40 d'un élément de profilé P3, P5, P7, P9, P11 ou P13, qui peut constituer un renfort formant partie de la bande de roulement complexe de la figure 1.

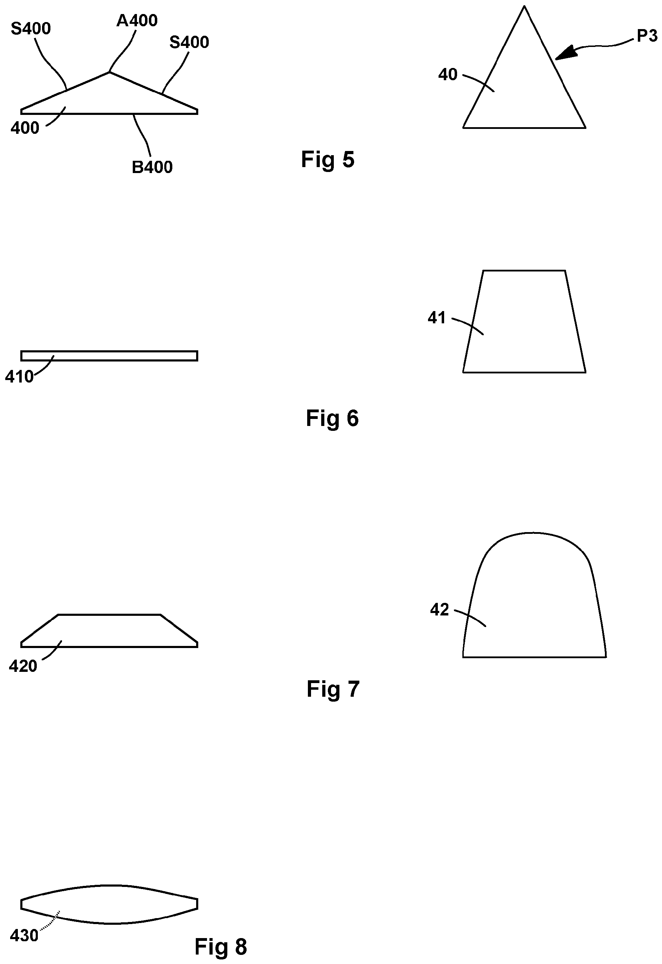

Cet élément de profilé P3, P5, P7, P9, P11, P13 est ici préférentiellement obtenu à l'aide d'une bandelette 4 de section transversale 400 sensiblement triangulaire, et plus préférentiellement de section transversale 400 sensiblement triangulaire isocèle, du type de celle illustrée à la figure 5.

A chaque tour de spire, on ajuste le pourcentage d'étirement de la bandelette.

A titre d'exemple, les pourcentages d'étirement utilisés pour réaliser l'élément de profilé illustré à la figure 4, correspondent aux valeurs suivantes :
- la première spire 401, correspondant au premier tour d'enroulement de la bandelette sur le tambour d'assemblage, est obtenue avec un étirement de 0%. La vitesse circonférentielle du tambour d'assemblage 1 est égale à la vitesse linéaire de sortie de la buse 3,
- la deuxième spire 402, la troisième spire 403 et la quatrième spire 404 sont également déposées avec un étirement nul ; l'ajustement opéré lors de la pose de ces premières spires 401, 402, 403, 404 consiste donc, dans cet exemple, à conserver, d'une spire à l'autre, un pourcentage d'étirement identique, valant ici 0%,
- la cinquième spire 405 est déposée avec un étirement de 40%,
- la sixième spire 406 est déposée avec un étirement de 60%, et
- la septième spire 407 est déposée avec un étirement de 80%.

Avantageusement, lorsque la section de la bandelette 4 est triangulaire, la base B400 de ladite section triangulaire de bandelette vient, à chaque tour, se poser en appui contre la surface radialement externe de la section triangulaire de bandelette posée lors du tour précédent, tandis que le sommet A400 de ladite section triangulaire de bandelette forme une pointe en saillie radiale externe, qui pourra avantageusement servir d'élément d'accroche, et le cas échéant d'élément de positionnement, notamment d'élément de centrage, pour la spire suivante.

On observera que les spires sont superposées de sorte que l'axe longitudinal des spires reste aligné sur une position transversale XX' fixe pendant toute la durée de réalisation de l'élément de profilé P3, P5, P7, P9, P11, P13 considéré, c'est-à-dire pendant toute la durée de réalisation de la section transversale 40 dudit élément profilé.

Plus particulièrement, les sommets des sections triangulaires successives de la bandelette 4, qui correspondent aux spires successives constitutives de l'empilement, pourront avantageusement être alignés sur ladite position transversale XX', tel que cela est visible sur la figure 4.

La base B402, B403 ... B407 de la section triangulaire de bandelette de chaque spire 402, 403, 404, 405, 406, 407 peut avantageusement se répartir de part et d'autre du sommet A401, A402, ... A406 de la section de bandelette de la spire précédente 401, 402, ...406, et plus globalement de part et d'autre de la position transversale XX' choisie. Ceci confère à l'empilement une structure, de préférence sensiblement en chevrons, qui possède une grande stabilité par rapport à ladite position transversale XX'.

L'utilisation préférentielle d'une bandelette de section triangulaire isocèle permet de centrer les spires successives les unes par rapport aux autres, sur la position transversale XX', et d'obtenir une structure d'élément de profilé P3, P5, P7, P9, P11, P13 dont la section 40 est sensiblement symétrique par rapport à un axe radial de symétrie qui correspond à ladite position transversale XX' et à l'alignement radial des sommets des sections triangulaires de la bandelette.

Par ailleurs, l'utilisation d'une bandelette 4 de section triangulaire permet à chaque spire 401, 402..., qui présente une épaisseur radiale plus importante en son centre, situé à l'aplomb du sommet A401, A402... de ladite section et de la position transversale XX' choisie, qu'aux extrémités de sa base B401, B402..., situées de part et d'autre de la position transversale XX' choisie, d'induire un décalage radial entre ledit sommet et lesdites extrémités, et ainsi de préfigurer l'inclinaison des bords de l'élément de profilé P3, P5, P7, P9, P11, P13.

En outre ce décalage radial entre le sommet de la section triangulaire et les extrémités de la base de ladite section triangulaire peut avantageusement être accentué à chaque nouvelle spire, du fait du cumul des épaisseurs liés à l'empilement, ce qui permet de générer un élément de profilé P3, P5, P7, P9, P11, P13 relativement étroit et pointu, et de préférence sensiblement triangulaire, bien que particulièrement stable.

Les figures 5 à 8 illustrent des sections transversales 400, 410, 420, 430 de bandelettes différentes permettant d'obtenir des éléments de profilé de sections transversales 40, 41, 42 variées.

Pour rappel, la figure 5 illustre le cas faisant l'objet de la description qui précède, dans lequel on cherche à obtenir un élément de profilé P3, P5, P7, P9, P11 ou P13 de section sensiblement triangulaire 40 à l'aide d'une bandelette 4 de section constante également triangulaire 400, ici de préférence triangulaire isocèle 400.

La figure 6 illustre le cas d'une bandelette de section rectangulaire 410, permettant d'obtenir un élément de profilé de section trapézoïdale 41.

La figure 7 illustre le cas d'une bandelette de section trapézoïdale 420 utilisée pour former un élément de profilé 42, ici en dôme. Pour obtenir un élément de profilé similaire on pourra également utiliser une bandelette de section lenticulaire 430 telle que celle illustrée à la figure 8.

On constatera, à l'évocation des éléments ci-dessus, que le choix du profil de la section de la bandelette et le choix des rapports d'étirement offrent une variété infinie de sections possibles pour l'élément de profilé obtenu en mettant en oeuvre les étapes selon l'invention.

Ceci étant, pour les raisons mentionnées plus haut, on privilégiera de préférence l'utilisation d'une bandelette 4 de section triangulaire 400, en particulier lorsque l'on souhaite obtenir un élément de profilé P3, P5, P7, P9, P11 ou P13 sensiblement triangulaire, ou sensiblement pointu, qui va globalement en s'affinant au fur et à mesure que l'on s'éloigne radialement de l'axe du tambour, à la position transversale XX' considérée.

A ce titre, les inventeurs ont constaté que, pour obtenir certaines formes d'éléments de profilé P3, P5, P7, P9, P11 ou P13, notamment pour obtenir des formes triangulaires, une bandelette de section triangulaire, et plus particulièrement de section triangulaire isocèle, pouvait être bien plus stable et facile à mettre en oeuvre qu'une bandelette de section autre, et notamment qu'une bandelette de section rectangulaire.

Bien entendu, l'invention n'est pas limitée aux seules variantes de réalisation susmentionnées, l'homme du métier étant notamment à même d'isoler ou de combiner l'librement entre elles l'une ou l'autre des caractéristiques décrites dans ce qui précède, ou de leur substituer des équivalents.

En particulier, on pourrait envisager, par exemple, d'utiliser une bandelette de section sensiblement triangulaire, en ceci qu'elle posséderait bien, comme la bandelette de section triangulaire à base plate décrite ci-dessus, un premier sommet A400 radialement saillant et deux autres sommets placés tous deux radialement en retrait dudit premier sommet et formant les extrémités d'une base B400 destinée à être placée plus près de l'axe du tambour 1 que le sommet radialement saillant, mais au sein de laquelle ladite base B400 serait légèrement concave plutôt que rectiligne. Par exemple, ladite base pourrait être formée par une ligne brisée, en forme de V rentrant vers l'intérieur de la section triangulaire, ladite ligne brisée comprenant deux sous-segments sécants qui partiraient chacun d'une extrémité de la base et qui se rejoindraient à l'aplomb du sommet radialement externe A400 de la section.

En utilisant une bandelette dont la section délivrée présente une forme sensiblement triangulaire à base concave, on observerait toujours, voire l'on renforcerait, lors de l'empilement réalisé à une même position transversale XX', un effet d'auto-centrage des spires successives sur ladite position transversale XX', puisque le creux de la base concave de la spire en cours de pose viendrait s'aligner sur le sommet radialement saillant de la spire précédente, tandis que les extrémités radialement internes de la base se répartiraient de part et d'autre de la position transversale XX' et du sommet de la spire précédente, en créant ainsi un empilement particulièrement précis et robuste.

Globalement, l'agencement triangulaire de la section de bandelette permet de préférence dans tous les cas, quelle que soit notamment la forme, plate ou concave, de la base de la section délivrée, d'appuyer la partie centrale de la base B402 d'une spire 402 sur le sommet A401 radialement saillant de la spire précédente 401, tout en plaçant les deux extrémités de ladite base B402 radialement plus près de l'axe du tambour 1 que ne l'est ledit sommet A401 de la spire précédente, ce qui assure le centrage et la stabilité de l'empilement.

En tout état de cause, l'homme du métier pourra privilégier un profil de section de bandelette 4 qui présente une bonne complémentarité d'une spire à l'autre afin de remplir efficacement la section 40 de l'élément de profilé.

En outre, l'homme du métier pourra privilégier les profils de section de bandelette dont l'agencement permet de limiter le risque d'emprisonner de l'air entre les spires successives lors de l'enroulement sur le tambour 1.

L'emploi d'une section transversale de bandelette délivrée sensiblement triangulaire 400 à base B400 rectiligne, telle que décrite plus haut, pourra être avantageuse à ce titre.

### NOMENCLATURE

1 Tambour d'assemblage.
2 Extrudeuse.
3 Buse d'extrusion.
4 Bandelette.
40 Section triangulaire d'un élément de profilé P3, P5, P7, P9, P11, ou P13.
41 Section trapézoïdale d'un élément de profilé.
42 Section en dôme d'un élément de profilé.
400 Section transversale triangulaire de bandelette,
401, 402, ...407 Spires résultant de l'enroulement de la bandelette sur le tambour.
A400, A401, A402, ... A407 Sommet, radialement externe, de la section triangulaire de la bandelette, respectivement de la spire considérée.
B400, B401, B402, ... B407 Base, radialement interne, de la section triangulaire de la bandelette, respectivement de la spire considérée.
S400, S401, S402, ... S407 Côtés de la section triangulaire adjacents au sommet radialement externe de la section
410 Profil de bandelette ayant une section transversale parallélépipédique, de préférence rectangulaire.
420 Profil de bandelette ayant une section transversale trapézoïdale.
430 Profil de bandelette ayant une section transversale lenticulaire.
PC Profilé complexe.
P1, P2, P3, P4, P5, P6, P7, P8, P9, P10, P11, P12, P13, P14, P15, P16 Eléments de profilé formant le profilé complexe PC.
M1, M2, M3, M4, M5 Mélange de caoutchouc.

## Revendications

1. Procédé de fabrication d'un élément de profilé (P3, P5, P7, P9, P11, P13) en caoutchouc dans lequel on met en oeuvre les étapes suivantes :
- Etape A : on délivre une bandelette (4) de caoutchouc non vulcanisé de section constante donnée, sensiblement triangulaire,
- Etape B : on étire la bandelette d'un pourcentage d'élongation variable selon une loi prédéterminée, pour amener la bandelette (4) à une section réduite,
- Etape C : on réalise ledit élément de profilé (P3, P5, P7, P9, P11, P13) en enroulant sur un tambour d'assemblage (1) en rotation la bandelette de section réduite sur elle-même sans modifier la position transversale de l'axe longitudinal de la bandelette.

2. Procédé selon la revendication 1, dans lequel l'élément de profilé (P3, P5, P7, P9, P11, P13) a une section (40) sensiblement triangulaire.

3. Procédé selon la revendication 1 ou 2, dans lequel on réalise la bandelette (4) par extrusion d'une bande de section constante.

4. Procédé selon la revendication 3, dans lequel on utilise une extrudeuse (2) comprenant un piston se déplaçant à vitesse contrôlée dans un cylindre.

5. Procédé selon l'une quelconque des revendications précédentes, dans lequel, à l'étape B, on étire la bandelette (4) en ajustant le rapport entre la vitesse à laquelle on délivre la bandelette de profil constant et la vitesse circonférentielle du tambour d'assemblage (1).

6. Procédé selon la revendication 5, dans lequel la vitesse circonférentielle du tambour d'assemblage (1) est constante, et dans lequel on délivre la bandelette (4) à une vitesse variable.

7. Procédé selon la revendication 6 en combinaison avec la revendication 3 ou la revendication 4, dans lequel on ajuste le débit de l'outil d'extrusion (2).

8. Procédé selon la revendication 5, dans lequel on délivre la bandelette (4) à une vitesse constante, et dans lequel on fait varier la vitesse circonférentielle du tambour d'assemblage (1).

9. Procédé selon l'une quelconque des revendications précédentes, dans lequel la bandelette de section constante (4) a un profil triangulaire isocèle (400).

10. Procédé selon l'une quelconque des revendications précédentes, dans lequel la bandelette de section constante (4) a un profil triangulaire à base (B400) plate.

11. Procédé selon l'une quelconque des revendications précédentes dans lequel la température de la bandelette de section constante (4) au cours de l'étape B est comprise entre 60°C et 100°C

12. Procédé selon l'une quelconque des revendications précédentes dans lequel le pourcentage d'élongation varie de 0% à 300%.

## Patentansprüche

1. Verfahren zur Herstellung eines Profilelements (P3, P5, P7, P9, P11, P13) aus Kautschuk, bei dem die folgenden Schritte ausgeführt werden:
- Schritt A: Ausgeben eines Streifens (4) aus nicht vulkanisiertem Kautschuk mit gegebenem konstantem, im Wesentlichen dreieckigem Querschnitt,
- Schritt B: Recken des Streifens um einen gemäß einem vorbestimmten Gesetz variablen Dehnungsprozentsatz, um den Streifen (4) auf einen verminderten Querschnitt zu bringen,
- Schritt C: Ausführen des Profilelements (P3, P5, P7, P9, P11, P13), indem der Streifen mit vermindertem Querschnitt auf eine drehende Aufbautrommel (1) aufgewickelt wird, ohne die Querposition der Längsachse des Streifens zu verändern.

2. Verfahren nach Anspruch 1, bei dem das Profilelement (P3, P5, P7, P9, P11, P13) einen im Wesentlichen dreieckigen Querschnitt (40) hat.

3. Verfahren nach Anspruch 1 oder 2, bei dem der Streifen (4) durch Extrusion eines Bands mit konstantem Querschnitt ausgeführt wird.

4. Verfahren nach Anspruch 3, bei dem ein Extruder (2) verwendet wird, der einen Kolben umfasst, der sich mit kontrollierter Geschwindigkeit in einem Zylinder bewegt.

5. Verfahren nach einem der vorhergehenden Ansprüche, bei dem im Schritt B der Streifen (4) gereckt wird, indem das Verhältnis zwischen der Geschwindigkeit, mit welcher der Streifen mit konstantem Profil ausgegeben wird, und der Umfangsgeschwindigkeit der Aufbautrommel (1) angepasst wird.

6. Verfahren nach Anspruch 5, bei dem die Umfangsgeschwindigkeit der Aufbautrommel (1) konstant ist und bei dem der Streifen (4) mit einer variablen Geschwindigkeit ausgegeben wird.

7. Verfahren nach Anspruch 6 in Kombination mit Anspruch 3 oder Anspruch 4, bei dem der Durchsatz des Extrusionswerkzeugs (2) angepasst wird.

8. Verfahren nach Anspruch 5, bei dem der Streifen (4) mit einer konstanten Geschwindigkeit ausgegeben wird und bei dem man die Umfangsgeschwindigkeit der Aufbautrommel (1) variieren lässt.

9. Verfahren nach einem der vorhergehenden Ansprüche, bei dem der Streifen mit konstantem Querschnitt (4) ein gleichschenkliges dreieckiges Profil (400) hat.

10. Verfahren nach einem der vorhergehenden Ansprüche, bei dem der Streifen mit konstantem Querschnitt (4) ein dreieckiges Profil mit flacher Basis (B400) hat.

11. Verfahren nach einem der vorhergehenden Ansprüche, bei dem die Temperatur des Streifens mit konstantem Querschnitt (4) während des Schritts B zwischen 60 °C und 100 °C beträgt.

12. Verfahren nach einem der vorhergehenden Ansprüche, bei dem der Dehnungsprozentsatz von 0 % bis 300 % variiert.

## Claims

1. Method for manufacturing a rubber profiled-element portion (P3, P5, P7, P9, P11, P13), wherein the following steps are implemented:
- Step A: a strip (4) of unvulcanized rubber of given constant, substantially triangular, section is delivered,
- Step B: the strip is stretched by an elongation percentage that is variable according to a predetermined law, so as to give the strip (4) a reduced section,
- Step C: said profiled-element portion (P3, P5, P7, P9, P11, P13) is produced by winding the strip of reduced section on itself on a rotating building drum (1) without modifying the transverse position of the longitudinal axis of the strip.

2. Method according to Claim 1, wherein the profiled-element portion (P3, P5, P7, P9, P11, P13) has a substantially triangular section (40).

3. Method according to Claim 1 or 2, wherein the strip (4) is produced by extruding a band of constant section.

4. Method according to Claim 3, wherein an extruder (2) is used that comprises a piston that moves at a controlled speed in a cylinder.

5. Method according to any one of the preceding claims, wherein, in step B, the strip (4) is stretched by altering the ratio between the speed at which the strip of constant profile is delivered and the circumferential speed of the building drum (1).

6. Method according to Claim 5, wherein the circumferential speed of the building drum (1) is constant, and wherein the strip (4) is delivered at a variable speed.

7. Method according to Claim 6 in combination with Claim 3 or Claim 4, wherein the throughput rate of the extrusion tool (2) is altered.

8. Method according to Claim 5, wherein the strip (4) is delivered at a constant speed, and wherein the circumferential speed of the building drum (1) is varied.

9. Method according to any one of the preceding claims, wherein the strip of constant section (4) has an isosceles triangular profile (400).

10. Method according to any one of the preceding claims, wherein the strip of constant section (4) has a triangular profile with a flat base (B400).

11. Method according to any one of the preceding claims, wherein the temperature of the strip of constant section (4) is between 60°C and 100°C during step B.

12. Method according to any one of the preceding claims, wherein the elongation percentage varies from 0% to 300%.
